# EUROPÄISCHE PATENTSCHRIFT

(11) **EP 2 900 530 B1**
(45) Veröffentlichungstag und Bekanntmachung des Hinweises auf die Patenterteilung: **22.01.2020**
(21) Anmeldenummer: 13766529.5
(22) Anmeldetag: 25.09.2013
(51) Int. Cl.: B60T 7/08, B60T 13/66, B60T 17/22

(54) **STEUERUNG EINER PARKBREMSE**
CONTROL FOR A PARKING BRAKE
PILOTAGE DE FREIN DE STATIONNEMENT

(30) Priorität: 27.09.2012 DE 102012217542
(43) Veröffentlichungstag der Anmeldung: 05.08.2015
(73) Patentinhaber: Bayerische Motoren Werke Aktiengesellschaft, 80809 München (DE)
(72) Erfinder: ALMSTÄTTER, Martin, 82178 Puchheim (DE); BERNDANER, Martin, 82441 Ohlstadt (DE); THEIN, Roman, 80935 München (DE)
(86) Internationale Anmeldenummer: PCT/EP2013/069907
(87) Internationale Veröffentlichungsnummer: WO 2014/048950

(56) Entgegenhaltungen:
- DE-A1- 10 025 731
- DE-A1-102008 064 077
- DE-A1-102010 063 372

## Beschreibung

Die Erfindung betrifft ein Verfahren zum Bedienen einer Parkbremse durch einen Fahrer eines Fahrzeugs und ein Verfahren zum Ansteuern einer Parkbremse eines Fahrzeugs gemäß der Bedienung eines Tasters durch einen Fahrer des Fahrzeugs sowie entsprechende Vorrichtungen.

Parkbremsen können heutzutage über Taster bedient werden, die ein mechanisch bewegliches Teil umfassen, das verschiedene Positionen, hierin auch Zustände genannt, einnehmen kann. Ähnlich einem Schalter werden in den verschiedenen Zuständen verschiedene Schaltkreise geöffnet oder geschlossen, was einem Steuergerät den Zustand des Tasters mitteilt. Gleichzeitig kann ein solcher Taster auch eine einfache Statusanzeige, beispielsweise in Form einer LED, umfassen.

Jedoch sind zum Anschluss eines solchen Tasters an ein Steuergerät mehrere Leitungen nötig, darunter solche, die zur Verifikation des mithilfe einer anderen Leitung erfassten Zustandes des Tasters dienen und solche zum Treiben der Statusanzeige. In einer digitalen Ausführung werden so beispielsweise 4 Leitungen, in einer analogen Ausführung sogar 5 Leitungen zum Anschluss des Tasters verwendet.

Einige Taster zur Bedienung einer Parkbremse ermöglichen Zusatzfunktionen. Diese Zusatzmöglichkeiten erfordern jedoch auch, dass der Taster mit weiteren Leitungen an das Steuergerät angeschlossen wird. Taster dieses Typs sind mit bis zu elf Leitungen verbaut worden.

Durch die Vielzahl von Tasterleitungen entstehen hohe Kosten und Zusatzgewicht im Kabelbaum eines Fahrzeugs. Darüber hinaus bestehen im Fall eines Fehlers und einer analogen Tasterauswertung oft Unklarheiten darüber, ob der Fehler vom Taster selbst, dem Kabelbaum oder dem Steuergerät erzeugt wurde.

Dokument DE 10 2010 063372 A offenbart eine elektrisch betätigbare sowie steuerbare Feststellbremsanlage für Kraftfahrzeuge. Die Feststellbremsanlage ist modular aufgebaut und umfasst ein Bedienelement, eine Aktuatorvorrichtung, einen integrierten Mikroprozessor sowie eine übergeordnete Steuereinrichtung, um die Feststellbremsanlage hinsichtlich Komfortfunktionen zu ergänzen.

Aufgabe an den Fachmann ist die Anzahl der Tasterleitungen zu reduzieren und gleichzeitig Übertragungsfehler zu erkennen.

Die Aufgabe wird durch ein Verfahren nach einem der Ansprüche 1 oder 5 sowie durch eine Vorrichtung nach einem der Ansprüche 4 oder 10 gelöst. Vorteilhafte Weiterentwicklungen sind in den abhängigen Ansprüchen definiert.

In einem Aspekt umfasst ein Verfahren zum Bedienen einer Parkbremse durch einen Fahrer eines Fahrzeugs, wobei die Parkbremse mithilfe eines Tasters bedient wird, der dazu eingerichtet ist mindestens zwei und insbesondere drei Zustände einzunehmen: Erfassen des Zustands des Tasters; Kodieren des erfassten Zustandes; Erzeugen eines Prüfwortes für den kodierten Zustand mithilfe eines Cyclic Redundancy Checks; Erstellen einer zur Übertragung über einen eindrahtigen Kanal geeigneten Botschaft, umfassend den kodierten Zustand und das Prüfwort; Senden der Botschaft über einen eindrahtigen Kanal. Ein eindrahtiger Kanal kann eine Leitung mit einem Draht oder einem verdrillten Draht zur Übertragung sein.

Auf diese Weise wird die Übertragung über eine Leitung ermöglicht, was eine signifikante Einsparung an Leitungen ermöglicht und damit Kosten und Gewicht spart. Gerade in einem Kraftfahrzeug ist dies von Bedeutung. Durch die Verwendung eines Prüfwortes mit Cyclic Redundancy Check (CRC) können Fehler in der Übertragung vermieden beziehungsweise erkannt werden. Die Verwendung des Prüfwortes ermöglicht die Einsparung von Verifikationsleitungen.

Die Botschaft wird in Antwort auf eine Anfrage erstellt. Dies ermöglicht es, dass die Elektronik, die das vorgestellte Verfahren ausführt, einfach gehalten werden kann und deshalb nur wenig Energie verbraucht. Gleichzeitig ist ein teilweises Abschalten der Elektronik möglich, solange keine Anfrage kommt. Dies ermöglicht ebenfalls Energieeinsparungen.

In einer bevorzugten Weiterentwicklung wird die Botschaft zur Übertragung gemäß einer Local Interconnect Network (LIN) Spezifikation oder einer daraus abgeleiteten Protokoll-Spezifikation erstellt, wobei das Prüfwort in den Nutzdaten der Botschaft übertragen wird. Die Botschaft wird somit zwischen zwei Teilnehmern gemäß dem LIN Protokoll ausgetauscht. Die LIN Spezifikation wird vom Local Interconnect Network Konsortium herausgegeben. Nutzdaten bezeichnen insoweit Daten, die durch den LIN nicht festgelegt sind und von den Anwendungen generiert werden.

Ein weiterer Vorteil dieser Weiterentwicklung ist, dass auch Daten zum Taster übertragen werden können, insbesondere mithilfe einer Botschaft des LIN Protokolls. Wenn der Taster eine Statusanzeige (Status-LED) und/oder eine Hintergrundbeleuchtung (beispielsweise durch eine weitere LED) umfasst, kann/können diese mithilfe der übertragenen Daten angesteuert werden.

Darüber hinaus kann der in einer Botschaft des LIN übertragene kodierte Zustand, mit einem Prüfwort gesichert übertragen werden, obwohl die LIN Spezifikation keine Überprüfung und Absicherung durch einen CRC vorsieht.

In einer Weiterbildung umfasst das Verfahren auch das Erfassen einer Fehlfunktion des Tasters, von Mitteln zur Erfassung des Zustands des Tasters oder von elektronischen Verarbeitungsmitteln zur Ausführung von Teilen des Verfahrens und das Senden einer Fehlermeldung, insbesondere mittels einer Botschaft gemäß dem LIN Protokoll. Auf diese Weise wird bei Auftritt eines Fehlers des Gesamtsystems die Analyse der Herkunft des Fehlers vereinfacht, da die Fehlerquelle festgestellt und übermittelt wurde.

In einem anderen Aspekt umfasst eine Vorrichtung zum Bedienen einer Parkbremse durch einen Fahrer eines Fahrzeugs: Einen Taster, der mindestens zwei und insbesondere drei Zustände einnehmen kann; Mittel zur Erfassung des Zustands des Tasters; Elektronische Verarbeitungsmittel, die dazu eingerichtet sind, eines der obenstehenden Verfahren auszuführen. Es kann vorgesehen sein, dass der Taster eine Statusanzeige (LED) umfasst. Mithilfe dieser Vorrichtung lässt sich das offenbarte Verfahren mit seinen Vorteilen realisieren.

In einem zweiten Aspekt umfasst ein Verfahren zum Ansteuern einer Parkbremse eines Fahrzeugs gemäß der Bedienung eines Tasters durch einen Fahrer des Fahrzeugs, wobei der Taster mindestens zwei und insbesondere drei Zustände einnehmen kann: Empfangen einer Botschaft über einen eindrahtigen Kanal, wobei die Botschaft ein Prüfwort und einen kodierten Zustand des Tasters enthält, wobei das Prüfwort mithilfe eines Cyclic Redundancy Checks erstellt wurde; Prüfen des kodierten Zustands auf Übertragungsfehler mithilfe des Prüfworts gemäß einem Cyclic Redundancy Check; Falls die Prüfung keine Übertragungsfehler erkennt: Ausgeben einer Anweisung zum Aktivieren der Parkbremse, falls ein kodierter Zustand des Tasters empfangen wird, der anzeigt, dass die Parkbremse zu aktivieren ist. Ein eindrahtiger Kanal kann eine Leitung mit einem Draht oder einem verdrillten Draht zur Übertragung sein.

Auf diese Weise wird die Übertragung über eine Leitung ermöglicht, was eine signifikante Einsparung an Leitungen ermöglicht und damit Kosten und Gewicht spart. Gerade in einem Kraftfahrzeug ist dies von Bedeutung. Durch die Verwendung eines Prüfwortes mit Cyclic Redundancy Check können Fehler in der Übertragung vermieden beziehungsweise erkannt werden. Die Verwendung des Prüfwortes ermöglicht die Einsparung von Verifikationsleitungen.

Das Verfahren umfasst das Senden einer Anfrage nach dem Zustand des Tasters; wobei die Botschaft in Antwort auf eine vorher gesendete Anfrage empfangen wird. Dies ermöglicht es, dass die Elektronik am Taster, also die Mittel zur Erfassung des Zustands des Tasters, die das vorgestellte Verfahren ausführt, einfach gehalten werden kann und deshalb nur wenig Energie verbraucht. Gleichzeitig ist ein teilweises Abschalten der Elektronik möglich, solange keine Anfrage kommt. Dies ermöglicht ebenfalls Energieeinsparungen.

In einer bevorzugten Weiterentwicklung ist die Botschaft gemäß einer Local Interconnect Network (LIN) Spezifikation oder einer daraus abgeleiteten Protokoll-Spezifikation aufgebaut, wobei das Prüfwort in den Nutzdaten der Botschaft umfasst ist. Die Botschaft wird somit zwischen zwei Teilnehmern gemäß dem LIN Protokoll ausgetauscht. Die LIN Spezifikation wird vom Local Interconnect Network Konsortium herausgegeben. Ein weiterer Vorteil dieser Weiterentwicklung ist, dass auch Daten zum Taster übertragen werden können. Wenn der Taster eine Statusanzeige (Status-LED) umfasst, kann diese mithilfe dieser übertragenen Daten angesteuert werden. Darüber hinaus kann der in einer Botschaft des LIN übertragene kodierte Zustand, mit einem Prüfwort gesichert übertragen werden, obwohl die LIN Spezifikation keine Überprüfung und Absicherung durch einen CRC vorsieht.

In einer Ausprägung des Verfahrens umfasst dieses ferner: Senden von zwei Anfragen nach dem Zustand des Tasters, wobei zwischen den Anfragen ein ausreichend großer Zeitraum liegt, in dem der Empfang einer Antwortbotschaft erwartet werden kann; Feststellen, dass in dem Zeitraum zwischen den Anfragen und in einem zweiten Zeitraum nach der letzten Anfrage, in dem der Empfang einer Botschaft erwartete werden kann, keine Botschaft empfangen wurde; In Antwort auf das Feststellen: Schreiben einer entsprechenden Fehlermeldung in den Fehlerspeicher. Auf dieses Weise wird die Funktionstüchtigkeit des normalerweise antwortenden Systems am Taster geprüft. Antwortet dieses nämlich nicht in der erwarteten Zeit, ist von einer Fehlfunktion auszugehen.

Darüber hinaus ist in einer Fortentwicklung vorgesehen, eine Botschaft zu empfangen, insbesondere gemäß dem LIN Protokoll, die eine Fehlfunktion des Tasters, von Mitteln zur Erfassung des Zustands des Tasters oder von elektronischen Verarbeitungsmitteln, die vergleichsweise nahe am Taster angeordnet sind, anzeigen. Diese Fehlfunktion beziehungsweise Botschaft wird in einem Fehlerspeicher abgelegt. Auf diese Weise wird bei Auftritt eines Fehlers des Gesamtsystems die Analyse der Herkunft des Fehlers vereinfacht, da die Fehlerquelle festgestellt und übermittelt wurde.

Offenbart wird ferner eine Vorrichtung zum Ansteuern einer Parkbremse eines Fahrzeugs gemäß der Bedienung eines Tasters durch einen Fahrer eines Fahrzeugs, wobei der Taster mindestens zwei und insbesondere drei Zustände einnehmen kann, umfassend: Mittel zum Empfangen einer Botschaft über einen eindrahtigen Kanal; Einen Fehlerspeicher; Elektronische Verarbeitungsmittel, die dazu eingerichtet sind, ein Verfahren nach dem zweiten Aspekt oder einer der dargestellten Abwandlung davon auszuführen. Mithilfe dieser Vorrichtung lässt sich das offenbarte Verfahren gemäß dem zweiten Aspekt mit seinen Vorteilen realisieren.

### KURZE BESCHREIBUNG DER ZEICHNUNGEN

- Fig. 1: zeigt schematisch den Aufbau eines Systems gemäß einer Ausführungsform.
- Fig. 2: zeigt schematisch den Aufbau einer Botschaft gemäß einer Ausführungsform.

### DETAILLIERTE BESCHREIBUNG DER AUSFÜHRUNGSBEISPIELE

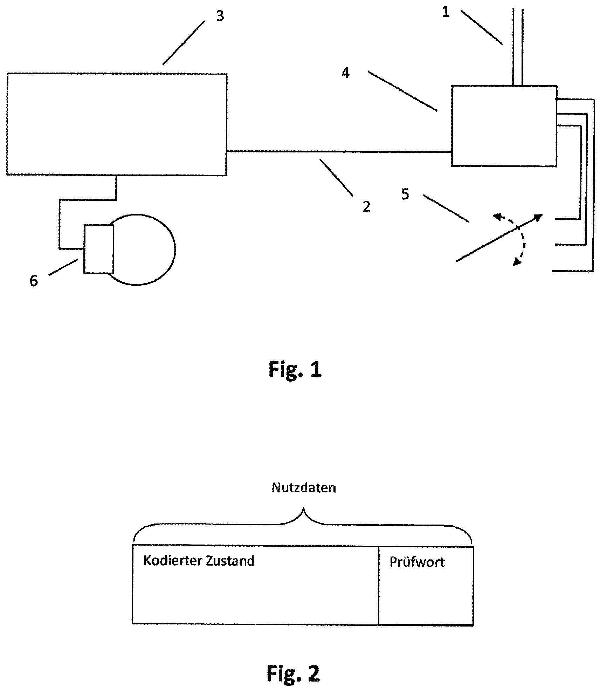

Fig. 1 zeigt in einem System zum Bedienen einer Parkbremse gemäß einer Ausführungsform schematisch einen Taster 5, der drei Zustände einnehmen kann. Die Ruheposition des Tasters 5 kann im mittleren Zustand sein, aus dem der Taster 5 durch Betätigung herausbewegt werden kann.

Das System umfasst weiter Mittel zur Erfassung 4 des Zustandes des Schalters 5. Diese Mittel 4 sind über Leitungen mit dem Schalter 5 verbunden und lesen über diese Leitungen den Zustand des Schalters aus. Die Mittel 4 sind räumlich nah am Schalter 5 angeordnet was vergleichsweise kurze Verbindungsleitungen vom Schalter 5 zu den Mitteln 4 ermöglicht mit einer Länge von zum Beispiel 1 cm, 2 cm oder 8 cm oder maximal 10 cm. Weiterhin sind die Mittel 4 zur Erfassung des Zustandes mit einer Vorrichtung 3 zur Ansteuerung einer Parkbremse 6 über eine eindrahtige Leitung verbunden. Diese Verbindung kann sich über eine vergleichsweise größere Entfernung, also mehr als 15cm, zum Beispiel 15cm, 30cm, 50cm oder 1m oder bis 2m, erstrecken und umfasst eine Leitung 2 zur Übertragung von Botschaften, also Daten. Schließlich sind die Mittel 4 noch über zwei Leitungen 1 mit einer gegebenenfalls ebenfalls vergleichsweise weiter entfernten Stromversorgung (nicht gezeigt) verbunden. Insgesamt sind die Mittel 4 zur Erfassung des Zustands des Schalters 5 also nur mit drei vergleichsweise längeren Leitungen verbunden.

Die Vorrichtung 3 zur Ansteuerung einer Parkbremse 6 ist mit der Parkbremse 6 über eine oder mehrere Leitungen verbunden. Gegebenenfalls umfasst die Parkbremse 6 weitere Steuereinrichtungen. Auch die Vorrichtung 3 ist mit der Stromversorgung und gegebenenfalls weiteren elektronischen Vorrichtungen verbunden.

Sowohl die Vorrichtung 3 als auch die Mittel 4 übertragen Botschaften gemäß dem LIN Protokoll, wobei die Vorrichtung 3 die Rolle des Masters übernimmt. Folglich sendet die Vorrichtung 3 zur Bestimmung des Zustands des Tasters 5 eine Anfrage an die Mittel 4 über die Leitung 2. Auf das Empfangen der Anfrage hin lesen die Mittel 4 den Zustand des Tasters 5 aus und kodieren diesen Zustand. Beispielsweise "1" für unterste Position des Tasters, "2" mit mittlere Position des Tasters, usw. Für diesen kodierten Zustand wird dann durch die Mittel 4 ein Prüfwort mithilfe eines Cyclic Redundancy Check Verfahrens bestimmt. Sowohl der kodierte Zustand als auch das Prüfwort werden dann als Nutzdaten einer Botschaft gemäß dem LIN Protokoll an die Vorrichtung 3 über die eindrahtige Leitung 2 gesendet. Ein Beispiel für den Aufbau von Nutzdaten, die über den LIN übertragen werden ist in Fig. 2 dargestellt. Die Nutzdaten umfassen den kodierten Zustand und das Prüfwort.

Die Vorrichtung 3 empfängt die Botschaft und prüft mithilfe des Prüfwortes und des Cyclic Redundancy Check Verfahrens, ob Fehler in der Übermittlung aufgetreten sind. Stellt die Vorrichtung 3 fest, dass kein Fehler aufgetreten ist, gibt sie ein elektrisches Signal an die Parkbremse 6 aus, das auf dem empfangenen kodierten Zustand basiert, um die Bedienhandlung des Tasters 5 durch den Benutzer umzusetzen. Je nachdem, welchen Zustand die Parkbremse 6 dann einnimmt kann eine entsprechende Statusanzeige (LED) im Taster 5 aktiviert werden. Wenn die Parkbremse 6 aktiviert ist, kann eine Status-LED des Tasters 5 aktiviert werden. Dies geschieht durch das Senden einer Botschaft mit dem entsprechenden Befehl durch die Vorrichtung 3 an die Mittel 4, die die Status-LED entsprechend ansteuern.

Stellt die Vorrichtung 3 jedoch fest, dass die Übertragung fehlerhaft ist, so schreibt die Vorrichtung 3 eine Fehlermeldung mit weiteren Daten, beispielsweise Uhrzeit, Datum und/oder empfangene Daten, in einen in ihr enthaltenen Fehlerspeicher.

## Patentansprüche

1. Verfahren zum Bedienen einer Parkbremse (6) durch einen Fahrer eines Fahrzeugs, wobei die Parkbremse (6) mithilfe eines Tasters (5) bedient wird, der dazu eingerichtet ist mindestens zwei und insbesondere drei Zustände einzunehmen, umfassend:
Erfassen des Zustands des Tasters (5);
Kodieren des erfassten Zustandes;
Erzeugen eines Prüfwortes für den kodierten Zustand mithilfe eines Cyclic Redundancy Checks;
Erstellen einer zur Übertragung über einen eindrahtigen Kanal (2) geeigneten Botschaft, umfassend den kodierten Zustand und das Prüfwort;
Senden der Botschaft über einen eindrahtigen Kanal (2);
wobei die Botschaft in Antwort auf eine Anfrage erstellt wird.

2. Verfahren nach einem der vorhergehenden Ansprüche, wobei die Botschaft zur Übertragung gemäß einer Local Interconnect Network (LIN) Spezifikation oder einer daraus abgeleiteten Protokoll-Spezifikation erstellt wird, wobei das Prüfwort in den Nutzdaten der Botschaft übertragen wird.

3. Vorrichtung zum Bedienen einer Parkbremse (6) durch einen Fahrer eines Fahrzeugs, umfassend:
Einen Taster (5), der mindestens zwei und insbesondere drei Zustände einnehmen kann;
Mittel zur Erfassung des Zustands des Tasters (5);
Elektronische Verarbeitungsmittel, die dazu eingerichtet sind ein Verfahren nach einem der vorhergehenden Ansprüche auszuführen.

4. Verfahren zum Ansteuern einer Parkbremse (6) eines Fahrzeugs gemäß der Bedienung eines Tasters (5) durch einen Fahrer des Fahrzeugs, wobei der Taster (5) mindestens zwei und insbesondere drei Zustände einnehmen kann, umfassend:
Empfangen einer Botschaft über einen eindrahtigen Kanal (2), wobei die Botschaft ein Prüfwort und einen kodierten Zustand des Tasters (5) enthält, wobei das Prüfwort mithilfe eines Cyclic Redundancy Checks erstellt wurde;
Prüfen des kodierten Zustands auf Übertragungsfehler mithilfe des Prüfworts gemäß einem Cyclic Redundancy Check;
Falls die Prüfung keine Übertragungsfehler erkennt: Ausgeben einer Anweisung zum Aktivieren der Parkbremse (6), falls ein kodierter Zustand des Tasters (5) empfangen wird, der anzeigt, dass die Parkbremse (6) zu aktivieren ist;
wobei das Verfahren ferner umfasst:Senden einer Anfrage nach dem Zustand des Tasters (5);
wobei die Botschaft in Antwort auf die vorher gesendete Anfrage empfangen wird.

5. Verfahren nach Anspruch 4, wobei die Botschaft gemäß einer Local Interconnect Network (LIN) Spezifikation oder einer daraus abgeleiteten Protokoll-Spezifikation aufgebaut ist und wobei das Prüfwort in den Nutzdaten der Botschaft umfasst ist.

6. Verfahren nach einem der Ansprüche 4 und 5, ferner umfassend:
Schreiben einer Fehlermeldung in einen Fehlerspeicher, falls die Prüfung einen Übertragungsfehler erkennt.

7. Verfahren nach einem der Ansprüche 4 bis 6, ferner umfassend:
Senden von zwei Anfragen nach dem Zustand des Tasters (5), wobei zwischen den Anfragen ein ausreichend großer Zeitraum liegt, in dem der Empfang einer Antwortbotschaft erwartet werden kann;
Feststellen, dass in dem Zeitraum zwischen den Anfragen und in einem zweiten Zeitraum nach der letzten Anfrage, in dem der Empfang einer Botschaft erwartete werden kann, keine Botschaft empfangen wurde;
In Antwort auf das Feststellen: Schreiben einer entsprechenden Fehlermeldung in den Fehlerspeicher.

8. Vorrichtung zum Ansteuern einer Parkbremse (6) eines Fahrzeugs gemäß der Bedienung eines Tasters (5) durch einen Fahrer eines Fahrzeugs, wobei der Taster (5) mindestens zwei und insbesondere drei Zustände einnehmen kann, umfassend:
Mittel zum Empfangen einer Botschaft über einen eindrahtigen Kanal (2);
Einen Fehlerspeicher;
Elektronische Verarbeitungsmittel, die dazu eingerichtet sind, ein Verfahren nach einem der Ansprüche 4 bis 7 auszuführen.

## Claims

1. Method for operating a parking brake (6) by a driver of a vehicle, wherein the parking brake (6) is operated with the aid of a pushbutton (5) which is configured to adopt at least two and, especially, three states, the method comprising:
detecting the state of the pushbutton (5);
coding the detected state;
generating a check word for the coded state with the aid of a cyclic redundancy check;
creating a message which is suitable for transmission via a single-wire channel (2) and comprises the coded state and the check word;
transmitting the message via a single-wire channel (2) ;
wherein the message is created in response to a query.

2. Method according to the preceding claim, wherein the message is created for transmission in accordance with a Local Interconnect Network (LIN) specification or a protocol specification derived therefrom, wherein the check word is transmitted in the payload of the message.

3. Device for operating a parking brake (6) by a driver of a vehicle, comprising:
a pushbutton (5), which can adopt at least two and, especially, three states;
means for detecting the state of the pushbutton (5) ;
electronic processing means, which are configured to carry out a method according to one of the preceding claims.

4. Method for controlling a parking brake (6) of a vehicle in accordance with the operation of a pushbutton (5) by a driver of the vehicle, wherein the pushbutton (5) can adopt at least two and, especially, three states, the method comprising:
receiving a message via a single-wire channel (2), wherein the message contains a check word and a coded state of the pushbutton (5), wherein the check word was created by use of a cyclic redundancy check;
checking the coded state for transmission faults by means of the check word according to a cyclic redundancy check; and
if no transmission faults are detected: outputting an instruction to activate the parking brake (6) if a coded state of the pushbutton (5) indicating that the parking brake (6) is to be activated is received;
wherein the method also comprises:
sending a query concerning the state of the pushbutton (5);
wherein the message is received in response to the previously sent query.

5. Method according to claim 4, wherein the message is constructed in accordance with a Local Interconnect Network (LIN) specification or a protocol specification derived therefrom, and wherein the check work is comprised in the payload of the message.

6. Method according to one of claims 4 and 5, further comprising:
writing a fault report into a fault memory, if the check identifies a transmission fault.

7. Method according to one of claims 4 to 6, further comprising:
sending two queries concerning the state of the pushbutton (5), wherein a sufficiently long period of time exists between the queries, during which period of time the receipt of a response message can be expected;
determining that no message was received in the period of time between the queries, and in a second period of time after the last query, in which second period of time the receipt of a message can be expected; and
in response to the determination: writing a corresponding fault report into the fault memory.

8. Device for controlling a parking brake (6) of a vehicle in accordance with the operation of a pushbutton (5) by a driver of a vehicle, wherein the pushbutton (5) can adopt at least two and, especially, three states, comprising:
means for receiving a message via a single-wire channel (2);
a fault memory;
electronic processing means, which are configured to carry out a method according to one of claims 4 to 7.

## Revendications

1. Procédé d'utilisation d'un frein de stationnement (6) par le conducteur d'un véhicule, ce frein de stationnement (6) étant manœuvré au moyen d'un palpeur (5) qui est réalisé pour pouvoir prendre au moins deux et en particulier trois états, comprenant des étapes consistant à :
détecter l'état du palpeur (5),
coder l'état ainsi détecté,
créer un mot de contrôle pour l'état codé à l'aide d'un contrôle de redondance cyclique,
établir un message adapté à une transmission sur un canal unifilaire (2) comprenant l'état codé et le mot de contrôle,
transmettre le message sur un canal unifilaire (2),
le message étant établi en réponse à une demande.

2. Procédé conforme à la revendication précédente,
selon lequel le message est établi pour permettre une transmission conformément à une spécification de réseau interconnecté local (LIN) ou une spécification d'un protocole dérivé de celui-ci, le mot de contrôle est transmis dans les données d'utilisateur du message.

3. Dispositif d'utilisation d'un frein de stationnement (6) par le conducteur d'un véhicule comprenant :
un palpeur (5) pouvant prendre au moins deux et en particulier trois états,
des moyens permettant de détecter l'état du palpeur (5),
des moyens de traitement électroniques réalisés pour permettre la mise en œuvre d'un procédé conforme à l'une des revendications précédentes.

4. Procédé de commande d'un frein de stationnement (6) d'un véhicule conformément à la manœuvre d'un palpeur (5) par le conducteur du véhicule, ce palpeur (5) pouvant prendre au moins deux et en particulier trois états, comprenant les étapes suivantes consistant à :
recevoir un message sur un canal unifilaire (2), ce message renfermant un mot de contrôle et un état codé du palpeur (5), le mot de contrôle ayant été établi à l'aide d'un contrôle de redondance cyclique,
contrôler l'état codé pour identifier des défauts de transmission à l'aide du mot de contrôle conformément à un contrôle de redondance cyclique,
si le contrôle n'a pas identifié de défaut de transmission, délivrer une instruction pour activer le frein de stationnement (6), si est reçu un état codé du palpeur (5) qui indique que le frein de stationnement (6) doit être activé,
le procédé comprenant en outre une étape consistant à transmettre une demande concernant l'état du palpeur (5), le message étant reçu en réponse à la demande préalablement transmise.

5. Procédé conforme à la revendication 4,
selon lequel le message est construit conformément à une spécification de réseau interconnecté local (LIN) ou d'une spécification d'un protocole dérivé de celui-ci, et le mot de contrôle est renfermé contenu dans les données d'utilisateur du message.

6. Procédé conforme à l'une des revendications 4 et 5,
comprenant en outre une étape consistant à :
inscrire une notification de défaut dans une mémoire de défaut si le contrôle identifie un défaut de transmission.

7. Procédé conforme à l'une des revendications 4 à 6,
comprenant en outre des étapes consistant à :
transmettre deux demandes concernant l'état du palpeur (5), entre les demandes s'écoulant un temps suffisamment grand pendant lequel la réception d'un message de réponse peut être attendue,
déterminer que, pendant le temps écoulé entre les demandes et, pendant un second temps après la dernière demande pendant lequel la réception d'un message peut être attendue, aucun message n'a été reçu,
en réponse à cette détermination inscrire une notification de défaut correspondante dans la mémoire de défaut.

8. Dispositif de commande d'un frein de stationnement (6) d'un véhicule conformément à la manœuvre d'un palpeur (5) par le conducteur du véhicule, ce palpeur (5) pouvant prendre au moins deux et en particulier trois états, comprenant :
des moyens de réception d'un message sur un canal unifilaire (2),
une mémoire de défaut,
des moyens de traitement électroniques qui sont réalisés pour permettre la mise en œuvre d'un procédé conforme à l'une des revendications 4 à 7.
